# FASCICULE DE BREVET EUROPEEN

(11) **EP 1 927 424 B1**
(45) Date de publication et mention de la délivrance du brevet: **29.12.2010**
(21) Numéro de dépôt: 07121941.4
(22) Date de dépôt: 29.11.2007
(51) Int. Cl.: B23K 26/06, B23K 26/08, B23K 26/34, C23C 4/16, C23C 24/08, B23K 26/14

(54) **Dispositif de rechargement d'une face concave d'une pièce tubulaire par apport de matière de rechargement et d'énergie par laser**
Vorrichtung zum Wiederaufladen einer konkaven Oberfläche eines Werkstückes durch Einbringung eines Materiales und durch Einbringung von Laserenergie
Device for built-up welding of a concave surface of a workpiece through injection of material and laser energy

(30) Priorité: 02.12.2006 FR 0655286
(43) Date de publication de la demande: 04.06.2008
(73) Titulaire: Technogenia, 74410 Saint Jorioz (FR)
(72) Inventeur: Dezert, Didier, 74540 Chapeiry (FR); Crepin, Jean-Baptiste, Atlanta, Georgia 30342 (US)
(74) Mandataire: Poncet, Jean-François

(56) Documents cités:
- CA-A1- 2 317 926
- JP-A- 2000 153 382
- US-A- 5 132 508
- US-A- 5 418 350
- US-A1- 2002 164 436
- US-A1- 2004 232 119

## Description

La présente invention concerne un dispositif de rechargement d'une pièce par apport de matière de rechargement contenant des grains de matière dure réfractaire et d'alliages métalliques et d'énergie par laser conformément au preambule de la revendication 1 (voir, par exemple, US 2002/164 436 A).

Plus particulièrement, l'invention concerne un dispositif de rechargement d'une face concave d'une pièce tubulaire par apport de matière de rechargement en poudre et par apport d'énergie par laser.

Des pièces tubulaires comportant une couche de matière dure réfractaire et d'alliage métallique sur leur face concave sont couramment utilisées pour être débitées en tronçons de longueurs variables afin de réaliser des paliers pour le guidage d'arbres en rotation. De telles pièces tubulaires peuvent également constituer des cylindres de guidage de pistons dans les moteurs thermiques.

On connaît déjà diverses méthodes pour réaliser le rechargement sur la face concave d'une pièce tubulaire.

Parmi celles-ci, le rechargement d'une face concave d'une pièce tubulaire par apport de matière de rechargement et d'énergie par laser s'avère particulièrement performant. En effet, l'utilisation d'un laser permet de n'affecter thermiquement qu'une zone très locale et peu profonde de la face concave de la pièce tubulaire. L'utilisation du laser permet ainsi de ne pas détériorer les propriétés du matériau constitutif de la pièce tubulaire qui a subi, préalablement au rechargement, un traitement thermique important en vue de lui conférer des propriétés mécaniques et chimiques particulières adaptées à ses conditions d'utilisation ultérieures.

Dans le document WO 00/23718 A1, on trouve la description d'un rechargement d'une face concave d'une pièce tubulaire par apport de matière de rechargement et d'énergie par laser.

Ce document décrit une source laser qui génère un faisceau laser dirigé sur une zone locale de la face concave de la pièce tubulaire. De la matière de rechargement est amenée sur cette zone locale et est échauffée par l'énergie du faisceau laser. La source laser est disposée radialement face à la surface à recharger, c'est-à-dire à l'intérieur de la pièce tubulaire, ce qui ne permet de recharger que des pièces tubulaires dont le diamètre est suffisant pour contenir la source laser. On limite ainsi, de façon très restrictive le diamètre des pièces tubulaires sur lesquelles il est possible de réaliser un rechargement.

On a déjà imaginé d'utiliser une source laser associée à des moyens pour conduire l'énergie du faisceau laser jusqu'à une zone à traiter à l'intérieur d'un tube, la source laser pouvant alors rester à l'extérieur du tube. La difficulté est alors d'assurer une production et une conduction d'énergie laser par des moyens efficaces, fiables et peu onéreux.

Par exemple, le document US 2002/0164436 A1 décrit un procédé et un dispositif pour recharger par laser des pièces tubulaires telles que des cylindres de moteur thermique. Un laser à diodes génère un faisceau laser, et un système optique conduit le faisceau laser dans le tube et le fait sortir radialement pour frapper une zone de traitement. Des moyens d'amenée de matière de rechargement conduisent sur la zone de rechargement une matière de rechargement en poudre à base de poudre d'alliage.

De la sorte, la source laser peut se trouver à l'extérieur de la pièce tubulaire, et le système optique s'engage axialement dans la pièce tubulaire pour amener l'énergie du laser sur la zone de traitement à l'intérieur de la pièce tubulaire.

Le document ne donne pas une description précise du système optique et des moyens d'amenée de matière de rechargement.

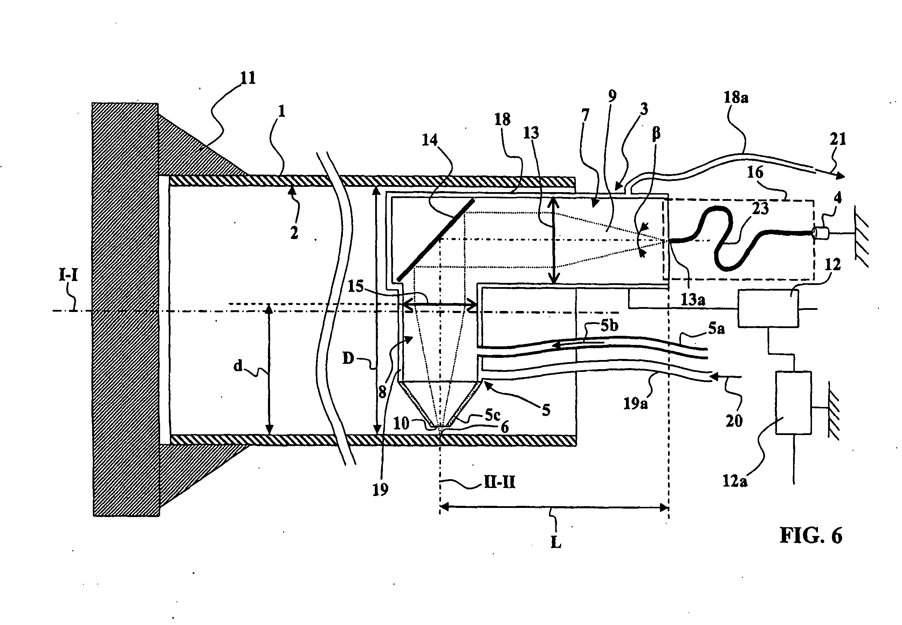

Tout au plus, la figure 6 illustre une buse de projection de matière de rechargement qui est placée latéralement à côté du dispositif optique de conduction de laser.

Un problème, d'ailleurs mentionné par le document ci-dessus, est l'échauffement produit par l'énergie du laser frappant la zone de traitement. Cet échauffement peut affecter l'efficacité du laser, et peut perturber la progression de la matière pulvérulente de rechargement jusqu'à la zone de traitement. Le document propose pour cela d'amener la matière pulvérulente par un convoyeur vibrant ou une vis.

Mais cet échauffement affecte aussi le dispositif optique de conduction du faisceau laser, et peut provoquer sa dégradation, en particulier dans des pièces tubulaires de petit diamètre où l'atmosphère est confinée.

Ce problème d'échauffement est d'autant plus crucial lorsqu'on veut recharger une pièce tubulaire avec un matériau contenant des particules réfractaires, que l'on utilise pour leur grande dureté. Il faut en effet une énergie thermique importante pour assurer la réalisation d'une couche de rechargement dure et efficace.

On connaît par ailleurs, du document JP 2000-153382 A, une machine à rayons laser capable d'effectuer un usinage par rayon laser d'un objet lorsque celui-ci est situé sous l'eau.

Le document décrit un dispositif d'usinage d'un tube, qui comprend une fibre optique conduisant un rayon laser vers une première unité à lentilles qui transforme le faisceau laser en rayons parallèles. Deux miroirs successifs dirigent ensuite le faisceau laser vers une seconde unité à lentilles qui fait converger le rayon laser vers une zone à usiner.

Dans ce document, il n'est pas question de rechargement, ni de laser à diodes, et la présence d'eau assure en elle-même un refroidissement et écarte les problèmes d'échauffement, qui ne sont pas mentionnés dans ce document.

Le document EP 1 247 878 A1 décrit un dispositif de rechargement d'une face concave de pièce tubulaire, comprenant une source laser à diodes, des moyens d'amenée de matière de rechargement par des conduites. Un guide de lumière ou fibre optique conduit le faisceau laser sur une longueur de pénétration axiale dans la pièce tubulaire. La matière de rechargement est une poudre à base de silicium. En sortie du dispositif optique, le faisceau laser est oblique.

Le document US 2004/232119 A1 décrit un dispositif de soudure par laser sans apport de matière, avec une lentille divergente en sortie de la source laser. Il apparaît qu'aucun de ces dispositifs connus n'est réellement approprié pour conduire de manière fiable et peu onéreuse l'énergie du laser depuis une source laser extérieure de type diode jusqu'à une zone de rechargement placée à l'intérieur d'une pièce tubulaire.

En particulier, la conduction du faisceau laser par une fibre optique à l'intérieur d'une pièce tubulaire de petit diamètre apparaît peu fiable, à cause de l'échauffement excessif de la fibre optique, qui en outre ne permet pas de diriger efficacement le rayon laser perpendiculairement à la zone de rechargement.

Les dispositifs optiques à lentilles décrits dans les documents ci-dessus ne donnent pas, non plus; satisfaction, et présentent des risques importants de dégradation des composants optiques pendant une utilisation à haute température.

### EXPOSE DE L'INVENTION

Ainsi, la présente invention vise à concevoir un dispositif de rechargement de la face concave d'une pièce tubulaire qui soit constitué d'éléments optiques peu onéreux, le dispositif devant être exempt de risque de dégradation ou de baisse d'efficacité résultant d'échauffement à l'intérieur d'une pièce tubulaire à recharger, afin de pouvoir effectuer des rechargements contenant des poudres de matières réfractaires.

Pour cela, l'idée qui est à la base de l'invention est de produire le rayon laser par une source laser à diodes et de conduire le faisceau laser dans la pièce à recharger avec une densité surfacique énergétique réduite, au moyen d'éléments optiques d'usage courant et peu onéreux.

La source laser à diodes est efficace et peu onéreuse. Elle présente toutefois l'inconvénient de produire un faisceau laser divergent, qui n'est pas naturellement apte à se propager convenablement dans la direction de pénétration jusqu'à la zone de rechargement. L'invention vise également à résoudre cette difficulté, par des moyens optiques appropriés.

Pour atteindre ces buts ainsi que d'autres, l'invention propose un dispositif de rechargement d'une face concave d'une pièce tubulaire par apport de matière de rechargement et d'énergie par laser conformément à la revendication 1.

Grâce à cette disposition, le faisceau laser se trouve initialement concentré à l'entrée du dispositif optique, en aval du dispositif optique intercalaire, puis devient un faisceau à rayons parallèle après le passage à travers la première lentille convergente. Le faisceau laser frappe alors le miroir selon une surface maximisée, évitant son échauffement et sa dégradation, pour ensuite être à nouveau concentré par la seconde lentille convergente.

Les moyens optiques sont simples et peu onéreux, et leur disposition optimise leur fonctionnement en les rendant peu sensibles aux échauffements.

En particulier, l'échauffement relativement réduit provoqué par le passage du rayon laser à travers les lentilles optiques et sur le miroir, ne risque pas de les dégrader, même en présence de l'échauffement environnant produit par l'impact du rayon laser sur la zone à recharger à l'intérieur de la pièce tubulaire.

Un avantage est de réaliser ainsi à faible coût un dispositif de rechargement d'une face concave d'une pièce tubulaire par apport de matière de rechargement et d'énergie par laser en utilisant des éléments d'usage courant, et assurant un confinement efficace du faisceau laser.

L'utilisation d'un laser à diodes comme source laser s'avère particulièrement avantageuse du fait de sa compacité, de sa facilité de modulation à des fréquences élevées, de ses faibles tension de service et puissance consommée grâce à un excellent rendement.

En outre, un laser à diodes émet un faisceau laser légèrement divergent. Il en résulte que le faisceau laser peut avoir une concentration d'énergie par unité de surface plus faible que les sources laser conventionnelles à gaz, de sorte qu'il est plus facile de le véhiculer sans risquer de détériorer les organes de transmission tels que des miroirs ou des lentilles.

Les moyens d'amenée de faisceau laser et les moyens de direction sont simples et économiques, réalisés à l'aide d'un matériel optique usuel, peu onéreux et de faible encombrement.

Les lentilles ainsi que le miroir sont en outre parfaitement capables de supporter la densité surfacique d'énergie du faisceau laser d'un laser à diodes.

La présence du dispositif optique intercalaire permet tout d'abord de prolonger la longueur de pénétration selon laquelle est amené le faisceau laser depuis le laser à diodes.

En outre, du fait que le dispositif optique intercalaire fait converger le faisceau laser issu du laser à diodes au voisinage du point focal objet de la première lentille convergente, la première lentille convergente transmet le faisceau laser sous la forme de rayons sensiblement parallèles. Ceci est un bon compromis entre le fait de conserver sans perte la totalité de l'énergie du faisceau laser et le fait d'amener le faisceau laser avec une densité surfacique énergétique la plus faible possible afin d'échauffer le moins possible le matériel optique (lentilles convergentes, miroir, ...).

Avantageusement, le dispositif optique intercalaire peut comprendre une troisième lentille convergente faisant converger le faisceau laser issu du laser à diodes au voisinage du point focal objet de la première lentille convergente.

On réalise ainsi un dispositif optique intercalaire simple pour collecter le faisceau laser divergent à la sortie du laser à diodes et pour l'amener selon la direction de pénétration jusqu'au point focal objet de la première lentille convergente.

De préférence, on peut prévoir que :
- le dispositif optique intercalaire comprend une quatrième lentille convergente, recevant le faisceau laser issu du laser à diodes,
- la troisième lentille convergente reçoit le faisceau laser issu de la quatrième lentille convergente,
- le laser à diodes est placé au voisinage du point focal objet de la quatrième lentille convergente,
- le point focal image de la troisième lentille convergente coïncide sensiblement avec le point focal objet de la première lentille convergente.

L'utilisation d'une quatrième lentille convergente permet d'allonger encore la longueur de pénétration sur laquelle est amené le faisceau laser. L'homme du métier comprendra aisément que la longueur de pénétration dépendra des distances focales des différentes lentilles convergentes utilisées dans les moyens d'amenée de faisceau laser et dans le dispositif optique intercalaire.

De préférence, le dispositif optique intercalaire peut comprendre une fibre optique collectant le faisceau laser issu du laser à diodes et l'amenant jusqu'au voisinage du point focal objet de la première, de la troisième ou de la quatrième lentille convergente, en fonction du mode de réalisation considéré.

La fibre optique permet d'amener le faisceau laser sur une grande longueur en minimisant les pertes énergétiques. L'utilisation d'une fibre optique permet également de faire pénétrer dans la pièce tubulaire les moyens d'amenée de faisceau laser et les moyens de direction sans avoir à déplacer la source laser, la fibre optique pouvant être prévue avec du mou.

De préférence, on peut prévoir que :
- la quatrième lentille convergente est sensiblement perpendiculaire à la direction de pénétration et sensiblement parallèle à la direction radiale,
- la seconde lentille convergente et la quatrième lentille convergente sont disposées radialement de part et d'autre de la direction de pénétration,
- le dispositif optique intercalaire comporte un miroir supplémentaire qui reçoit le faisceau laser issu de la quatrième lentille convergente et qui renvoie le faisceau laser selon la direction de pénétration,
- la fibre optique est disposée en enroulement sur un dispositif d'enroulement.

Avantageusement on peut prévoir que le dispositif optique intercalaire, la première lentille convergente et le miroir sont compris dans un tube de confinement creux à double paroi dans laquelle circule un fluide de refroidissement.

Le tube de confinement creux permet le maintien et le positionnement relatif des éléments constitutifs des moyens d'amenée de faisceau laser tout en réalisant un confinement sûr et fiable du faisceau laser.

Le tube de confinement creux à double paroi permet d'effectuer un refroidissement efficace des éléments qu'il contient afin d'éviter toute détérioration par échauffement lors de l'utilisation du dispositif.

De préférence, on peut prévoir que :
- la direction radiale dans laquelle le miroir renvoie le faisceau laser issu de la première lentille convergente est sensiblement perpendiculaire à la direction de pénétration,
   conformément à l'invention, l'axe optique de la deuxième lentille convergente coïncide sensiblement avec la direction radiale, les moyens d'amenée de matière de rechargement comprennent une buse à paroi interne en forme générale de cône à pointe orientée vers la sortie et dont le sommet est percé, formant ainsi l'orifice de sortie, et l'orifice de sortie de la buse est sensiblement coaxial à l'axe optique de la deuxième lentille convergente.

Dans le cas où la direction de pénétration est sensiblement horizontale, la direction radiale se trouve ainsi être verticale. Ceci permet de faire écouler par gravité la matière de rechargement à l'endroit où le faisceau laser heurte la surface à recharger.

De préférence, le dispositif peut comporter :
- un mandrin pour entraîner en rotation la pièce tubulaire à recharger,
- des premiers moyens de déplacement pour assurer un déplacement relatif selon la direction de pénétration entre d'une part la pièce tubulaire à recharger et d'autre part le sous-ensemble comprenant les moyens d'amenée de faisceau laser et les moyens de direction, pour faire pénétrer ce sous-ensemble à l'intérieur de la pièce tubulaire à recharger.

En complément, le dispositif peut comporter des seconds moyens de déplacement pour assurer un déplacement relatif selon une direction radiale entre d'une part la pièce tubulaire à recharger et d'autre part le sous-ensemble comprenant les moyens d'amenée de faisceau laser et les moyens de direction.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
- la figure 1 est une vue en coupe schématique d'un mode de réalisation non couvert par l'invention ;
- la figure 2 est une vue en coupe schématique d'un premier mode de réalisation de l'invention ;
- la figure 3 est une vue en coupe schématique d'un second mode de réalisation de l'invention;
- la figure 4 est une vue en coupe schématique d'un troisième mode de réalisation de l'invention ;
- la figure 5 est une vue en coupe schématique d'un quatrième mode de réalisation de l'invention ;
- la figure 6 est une vue en coupe schématique d'un cinquième mode de réalisation de l'invention ; et
- la figure 7 est une vue en coupe schématique d'un sixième mode de réalisation de l'invention.

### DESCRIPTION DES MODES DE REALISATION PREFERES

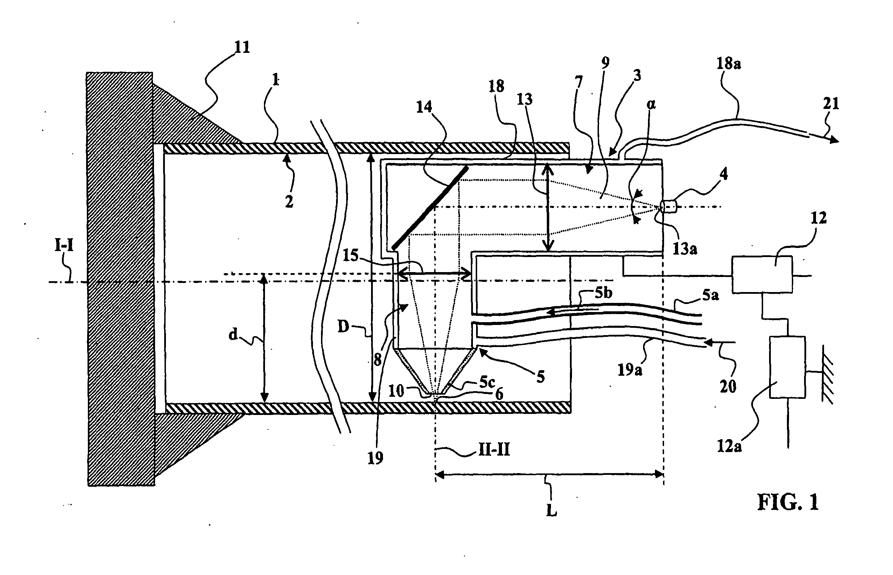

Sur la figure 1 est représentée une pièce tubulaire 1 à face concave 2 à recharger. La pièce tubulaire 1 s'étend selon un axe longitudinal I-I.

Le dispositif de rechargement comporte une source laser qui est un laser à diodes 4. Même si le laser à diodes 4 est représenté ici avec un très faible encombrement, il doit être compris que les moyens d'alimentation et de pilotage du laser à diodes 4 ne sont pas représentés et que ceux-ci peuvent avoir un encombrement très important et supérieur au diamètre intérieur D de la pièce tubulaire 1, de sorte qu'il est impossible de faire pénétrer le laser à diodes 4 et ses moyens d'alimentation et de pilotage à l'intérieur de la pièce tubulaire 1.

Le dispositif de rechargement comporte des moyens d'amenée de matière de rechargement 5, laquelle matière de rechargement est à base de grains de matière dure réfractaire et d'alliage métallique. Les moyens d'amenée de matière de rechargement 5 amènent la matière de rechargement au voisinage d'une zone de rechargement 6 sur la face concave 2 de la pièce tubulaire 1 à recharger.

Le dispositif de rechargement comprend un sous-ensemble 3 qui comporte des moyens d'amenée de faisceau laser 7 et des moyens de direction 8 pour diriger le faisceau laser 9 dans la zone de rechargement 6.

Les moyens d'amenée de faisceau laser 7 conduisent le faisceau laser 9 généré par le laser à diodes 4 sur une longueur de pénétration L le long d'une direction de pénétration qui peut coïncider avec l'axe longitudinal I-I de la pièce tubulaire 1. Les moyens de direction 8 dévient le faisceau laser 9 selon une direction radiale II-II à l'écart de la direction de pénétration.

Le laser à diodes 4 se trouve à l'extérieur de la pièce tubulaire 1, et les moyens d'amenée de faisceau laser 7 peuvent s'engager axialement totalement ou en partie dans la pièce tubulaire 1.

Au cours de l'utilisation du dispositif de rechargement, de la matière de rechargement à base de grains de matière dure réfractaire et d'alliage métallique est amenée par les moyens d'amenée de matière de rechargement 5 qui comportent, comme représenté sur la figure 1, un tuyau 5a dans lequel circule la matière de rechargement dans le sens et la direction définis par la flèche 5b. La matière de rechargement est véhiculée par un flux gazeux, de préférence avec un gaz neutre.

Les moyens d'amenée de matière de rechargement 5 comprennent une buse 5c à paroi interne en forme générale de cône à pointe orientée vers la sortie et dont le sommet est percé, formant ainsi un orifice de sortie 10. L'orifice de sortie 10 de la buse 5c est sensiblement coaxial à la direction radiale II-II.

La buse 5c utilisée peut avantageusement être conforme aux enseignements du document US 5,418,350 inséré comme référence. Une telle buse permet de diriger efficacement la matière de rechargement sur la seule zone de rechargement 6, évitant la déperdition de matière. En outre, une telle buse assure un préchauffage de la matière de rechargement qui la traverse, permettant de réduire la puissance laser nécessaire à la fusion de l'alliage et de la zone de rechargement et permettant ainsi de réduire encore l'échauffement des moyens optiques d'amenée de faisceau laser 7.

Les moyens d'amenée de matière de rechargement 5 amènent ainsi la matière de rechargement au voisinage de l'orifice de sortie 10 où la matière de rechargement est encore échauffée par le faisceau laser 9 jusqu'à fusion des grains d'alliage métallique. La matière de rechargement échauffée se dépose alors sur la zone de rechargement 6 de la face concave 2 de la pièce tubulaire 1, où l'alliage métallique se refroidit et se solidifie à nouveau pour réaliser le rechargement de la face concave 2.

Dans le mode de réalisation, non couvert par l'invention illustré sur la figure 1, la direction radiale II-II est verticale et la direction de pénétration, qui coïncide avec l'axe longitudinal I-I de la pièce tubulaire 1, est horizontale. La matière de rechargement transportée par un flux gazeux s'écoule ainsi vers l'orifice de sortie de la buse 5c, aidée par la gravité.

Un mandrin 11 permet de tenir et d'entraîner en rotation la pièce tubulaire 1 à recharger. Des premiers moyens de déplacement 12 assurent un déplacement relatif selon la direction de pénétration entre d'une part la pièce tubulaire 1 à recharger et d'autre part le sous-ensemble 3 comprenant les moyens d'amenée de faisceau laser 7 et les moyens de direction 8, pour faire pénétrer ce sous-ensemble 3 à l'intérieur de la pièce tubulaire 1 à recharger. Des seconds moyens de déplacement 12a assurent un déplacement relatif selon la direction radiale II-II entre d'une part la pièce tubulaire 1 à recharger et d'autre part le sous-ensemble 3 comprenant les moyens d'amenée de faisceau laser 7 et les moyens de direction 8.

La combinaison du mandrin 11 et des premiers moyens de déplacement 12 permet d'effectuer un rechargement sur la totalité de la face concave 2 de la pièce tubulaire 1.

La combinaison du mandrin 11 et des seconds moyens de déplacement 12a permet quant à elle de régler la distance entre l'orifice de sortie 10 et la zone de rechargement 6, et ce quel que soit le diamètre D de la pièce tubulaire 1. On peut ainsi venir frapper la zone de rechargement 6 avec le faisceau laser 9 selon une tache lumineuse dont le rayon est plus ou moins grand, et donc avec une densité surfacique d'énergie plus ou moins importante.

Dans le mode de réalisation, non couvert par l'invention de la figure 1, le mandrin 11 est fixe en position et rotatif selon l'axe I-I tandis que les moyens d'amenée de faisceau laser 7 et les moyens de direction 8 peuvent être déplacés en translation axiale selon l'axe I-I et en translation radiale selon la direction radiale II-II.

Dans le mode de réalisation, non couvert par l'invention illustré sur la figure 1, les moyens d'amenée de faisceau laser 7 et les moyens de direction 8 comprennent :
- une première lentille convergente 13 dont l'axe optique est orienté selon la direction de pénétration, (c'est-à-dire parallèle à l'axe I-I), et qui reçoit le faisceau laser 9 provenant directement du laser à diodes 4,
- un miroir 14 qui reçoit le faisceau laser 9 issu de la première lentille convergente 13 et qui renvoie celui-ci selon la direction radiale II-II à l'écart de la direction de pénétration,
- une seconde lentille convergente 15 qui reçoit le faisceau laser 9 issu du miroir 14 et qui fait converger le faisceau laser 9 au voisinage de la zone de rechargement 6.

Les moyens d'amenée de faisceau laser 7 et les moyens de direction 8 sont ainsi réalisés de façon simple et économique à l'aide d'un matériel optique usuel peu onéreux présentant un encombrement réduit. Il a ainsi été possible de réaliser des rechargements dans des tubes ayant un diamètre intérieur de moins de 100 mm.

En outre, les lentilles 13 et 15 et le miroir 14 sont capables de supporter la densité surfacique d'énergie du laser à diodes 4.

Enfin, il est avantageux d'utiliser un laser à diodes 4 dont la longueur d'onde permet une bonne absorption de l'énergie par la pièce tubulaire 1. Les moyens d'amenée de faisceau laser 7 et les moyens de direction 8 seront ainsi moins soumis à échauffement, l'énergie réfléchie par la pièce tubulaire 1 étant moindre. Les lentilles et miroirs utilisés en optique ont des caractéristiques qui varient en effet lors d'un échauffement, ce qui peut nuire au rendement du dispositif.

Le faisceau laser 9 jaillit du laser à diodes 4 en rayons sensiblement divergents sous la forme d'un cône d'angle au sommet d'angle a.

Dans le cas de la figure 1, le laser à diodes 4 est placé au point focal objet 13a de la première lentille convergente 13. La première lentille convergente 13 transmet ainsi le faisceau laser 9 sous la forme de rayons parallèles qui viennent frapper la surface du miroir 14. Le faisceau laser 9 est alors renvoyé à sensiblement 90°, toujours sous la forme de rayons parallèles, jusqu'à la deuxième lentille convergente 15 qui fait converger le faisceau laser 9 au voisinage de la zone de rechargement 6 sur la face concave 2 de la pièce tubulaire 1.

L'homme du métier comprendra que la deuxième lentille convergente 15 peut être remplacée de façon équivalente par une autre lentille ou un jeu de plusieurs autres lentilles afin de régler la distance d de convergence du faisceau laser 9. Il est cependant judicieux de choisir la deuxième lentille convergente 15 pour faire converger le faisceau laser 9 au voisinage de l'orifice de sortie 10 de la buse 5c. Le faisceau laser 9 vient ainsi frapper la zone de rechargement 6 avec une énergie sensiblement maximale pour échauffer suffisamment la matière de rechargement et garantir ainsi la qualité du rechargement. En outre, la convergence du faisceau laser 9 au voisinage de l'orifice de sortie 10 permet de positionner la buse 5c à proximité de la face concave 2, ce qui permet de réaliser des rechargements dans des pièces tubulaires de diamètre intérieur très réduit.

Le fait de placer le laser à diodes 4 au point focal objet 13a de la première lentille convergente 13 permet d'amener le faisceau laser 9 sous la forme d'un faisceau à rayons parallèles sur tout le chemin optique allant depuis la première lentille convergente 13 jusqu'à la seconde lentille convergente 15. On obtient ainsi, le long du chemin optique allant depuis la première lentille convergente 13 jusqu'à la seconde lentille convergente 15, un bon compromis entre le fait de conserver sans perte la totalité de l'énergie du faisceau laser 9 et le fait d'amener le faisceau laser 9 avec une densité surfacique énergétique la plus faible. Ceci permet notamment d'échauffer le moins possible les éléments optiques que sont les lentilles convergentes 13 et 15 et le miroir 14 lors de l'utilisation du dispositif de rechargement, en vue d'éviter leur détérioration et de minimiser les pertes d'énergie du faisceau laser 9.

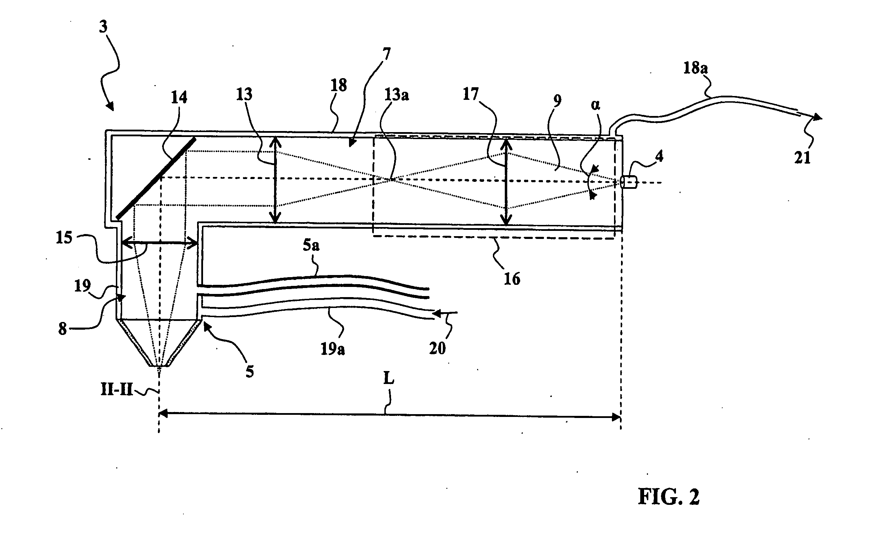

Dans les modes de réalisation illustrés sur les figures 2, 3 et 4, le dispositif de rechargement comprend en outre un dispositif optique intercalaire 16 qui fait converger le faisceau laser 9 issu du laser à diodes 4 selon la direction de pénétration au voisinage du point focal objet 13a de la première lentille convergente 13.

Dans le cas du mode de réalisation illustré sur la figure 2, le dispositif optique intercalaire 16 comporte une troisième lentille convergente 17 faisant converger le faisceau laser 9 issu du laser à diodes 4 au voisinage du point focal objet 13a de la première lentille convergente 13.

La longueur de pénétration L peut ainsi être sensiblement augmentée par rapport au mode de réalisation illustré sur la figure 1.

Dans les modes de réalisation, couverts ou non par l'invention, illustrés sur les figures 1 à 4, les moyens d'amenée de faisceau laser 7 et les moyens de direction 8 sont compris dans des tubes de confinement 18 et 19 creux à double paroi dans laquelle circule un fluide de refroidissement. Ce fluide de refroidissement est amené dans la double paroi des tubes de confinement 18 et 19 par des moyens d'amenée de fluide de refroidissement 18a et 19a qui sont des tuyaux.

La première lentille convergente 13, la seconde lentille convergente 15, le miroir 14 et le dispositif optique intercalaire 16 (pour les modes de réalisation des figures 2 à 4) sont ainsi efficacement refroidis afin d'éviter toute détérioration.

Dans les modes de réalisation, couverts ou non par l'invention, illustrés sur les figures 1 à 4, les tubes de confinement 18 et 19 sont interconnectés entre eux afin de réaliser une double paroi continue. Le fluide de refroidissement est ainsi amené par le tuyau 19a comme l'illustre la flèche 20 et sort par le tuyau 18a, comme illustré par la flèche 21, après avoir circulé dans la double paroi des tubes de confinement 18 et 19.

Il est avantageux de prévoir de tels moyens de refroidissement car l'amenée du faisceau laser 9 sur une grande longueur de pénétration L ne se fait pas sans perte, notamment du fait des imperfections des lentilles convergentes 13 et 15, du miroir 14 et du dispositif optique intercalaire 16, du fait de leurs dispositions relatives approximatives, et du fait de la diffusion de l'énergie du faisceau laser 9 dans le gaz et les poussières présentes dans les tubes 18 et 19.

Des rayons du faisceau laser 9 peuvent ainsi venir heurter les tubes de confinement 18 et 19 et les échauffer. La circulation du fluide de refroidissement permet de minimiser la détérioration par échauffement des tubes de confinement 18 et 19 et de refroidir l'ensemble des éléments des moyens d'amenée de faisceau laser 7 et des moyens de direction pour diriger le faisceau laser 9.

Dans les réalisations illustrées sur les figures 2 à 4, on voit que le faisceau laser 9 converge progressivement puis diverge entre les lentilles convergentes 17 et 13. Il en résulte que, dans ce tronçon de parcours, le faisceau laser 9 est concentré et tenu plus à l'écart de la paroi du tube de confinement 18, réduisant les risques d'échauffement du tube 18.

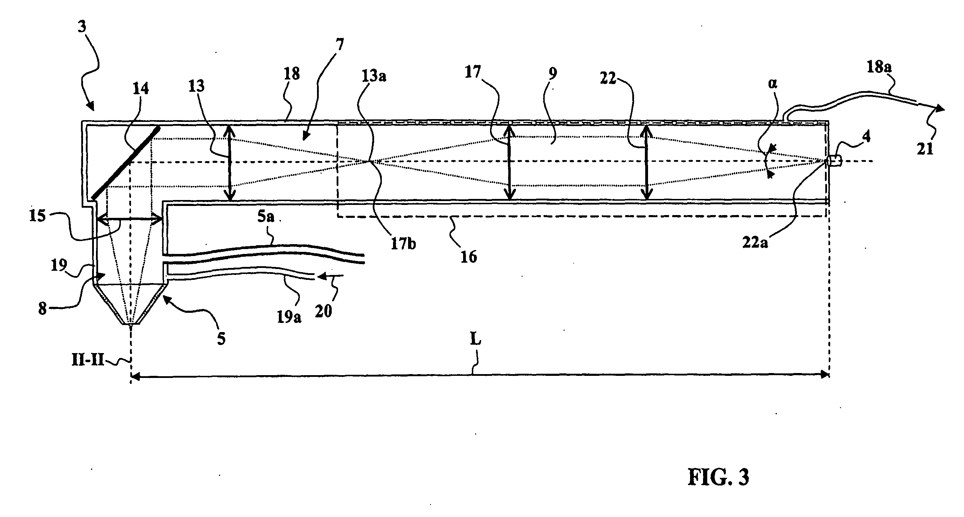

Dans le mode de réalisation illustré sur la figure 3, le dispositif optique intercalaire 16 comprend en outre une quatrième lentille convergente 22, recevant le faisceau laser 9 issu du laser à diodes 4. La troisième lentille convergente 17 reçoit le faisceau issu de la quatrième lentille convergente 22. Le laser à diodes 4 est placé au voisinage du point focal objet 22a de la quatrième lentille convergente 22. Le point focal image 17b de la troisième lentille convergente 17 coïncide sensiblement avec le point focal objet 13a de la première lentille convergente 13.

On allonge à nouveau de façon sensible la longueur de pénétration L sur laquelle est amené le faisceau laser 9. Ceci permet de réaliser des rechargements de la face concave 2 d'une pièce tubulaire 1 de longueur plus importante.

Dans le mode de réalisation de la figure 3, le laser à diodes 4 étant placé au voisinage du point focal objet 22a de la quatrième lentille convergente 22, la lentille convergente 22 renvoie le faisceau laser 9 sous la forme de rayons parallèles jusqu'à la troisième lentille convergente 17.

Entre les lentilles convergentes 22 et 17, les rayons du faisceau laser 9 sont ainsi plus proches des parois du tube de confinement 18. Du fait des imperfections de fabrication des lentilles convergentes 22 et 17, il est possible qu'une partie des rayons du faisceau laser 9 viennent ainsi heurter les parois du tube de confinement 18 et provoquer l'échauffement de celui-ci.

L'homme du métier comprendra ainsi aisément que la façon la plus opportune d'augmenter la longueur de pénétration L est de prévoir des lentilles convergentes 17 et 13 de distances focales adaptées et de les disposer sensiblement de la façon particulière illustrée dans les modes de réalisation des figures 2 et 3.

Cependant, la façon d'amener le faisceau laser 9 entre les lentilles convergentes 22 et 17 reste tout à fait performante dans le cas de lentilles convergentes 22 et 17 de bonne qualité.

En alternative au dispositif optique intercalaire 16 de la figure 3, il est possible de chercher à utiliser un dispositif de lentilles convergente et divergente disposées en alternance afin de faire converger puis diverger le faisceau laser 9 sur une grande longueur. Une telle solution s'avérera cependant moins économique que celle illustrée sur la figure 3, puisque nécessitant plus de lentilles dont la qualité devra être parfaite afin d'éviter au maximum les pertes énergétiques du faisceau laser 9.

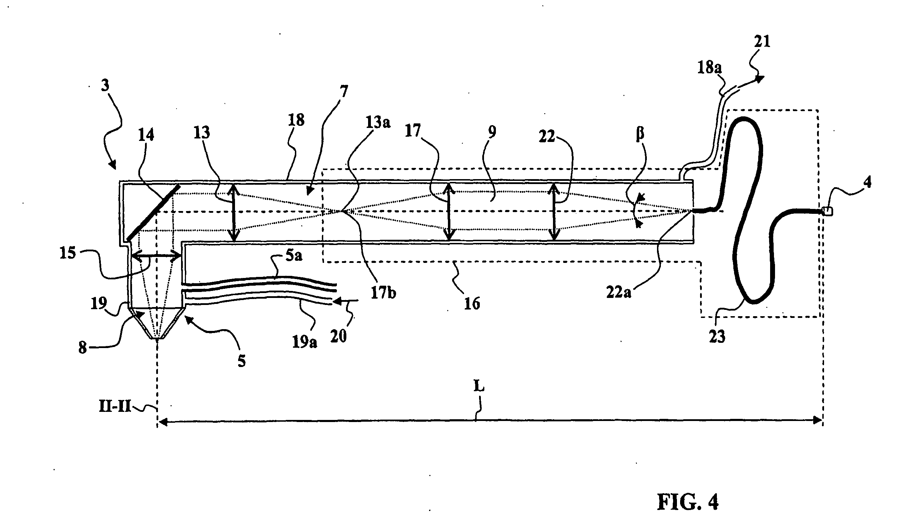

Dans le mode de réalisation illustré sur la figure 4, le dispositif optique intercalaire 16 comporte en outre une fibre optique 23 collectant le faisceau laser 9 issu du laser à diodes 4 et l'amenant jusqu'au voisinage du point focal objet 22a de la quatrième lentille convergente 22.

L'utilisation de la fibre optique 23 permet d'amener le faisceau laser 9 du laser à diodes 4 sur une grande longueur avec très peu de pertes énergétiques.

Au voisinage du point focal objet 22a, le faisceau laser 9 sort de la fibre optique 23 sous la forme de rayons divergents en cône d'angle au sommet β. Le faisceau laser 9 est ensuite traité de la même façon que dans le mode de réalisation illustré sur la figure 3. La présence de la fibre optique 23 permet à nouveau d'allonger de façon significative la longueur de pénétration L. En outre, à partir de la configuration illustrée sur la figure 4, il est possible de déplacer les tubes de confinement 18 et 19 selon la direction de pénétration tout en gardant le laser à diodes 4 (ainsi que ses moyens d'alimentation et de pilotage) fixe jusqu'à ce que la fibre optique 23 soit entièrement tendue entre le point focal objet 22a et le laser à diodes 4. Le dispositif de rechargement selon l'invention devient ainsi « télescopique », avec tous les avantages que cela peut comporter en termes d'encombrement.

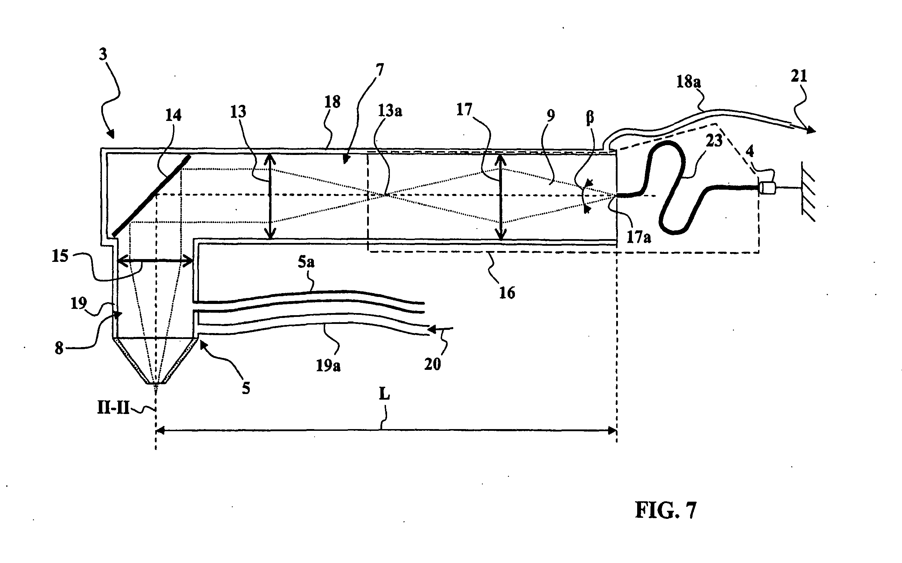

Les mêmes effets sont obtenus par les modes de réalisation des figures 6 et 7, qui sont des variantes des modes de réalisation illustrés sur les figures 1 et 2.

Pour ce faire, des fibres optiques 23 collectent le faisceau laser 9 issu du laser à diodes 4 pour l'amener respectivement jusqu'au voisinage du point focal objet 13a de la première lentille convergente 13 (figure 6) ou du point focal objet 17a de la troisième lentille convergente 17 (figure 7).

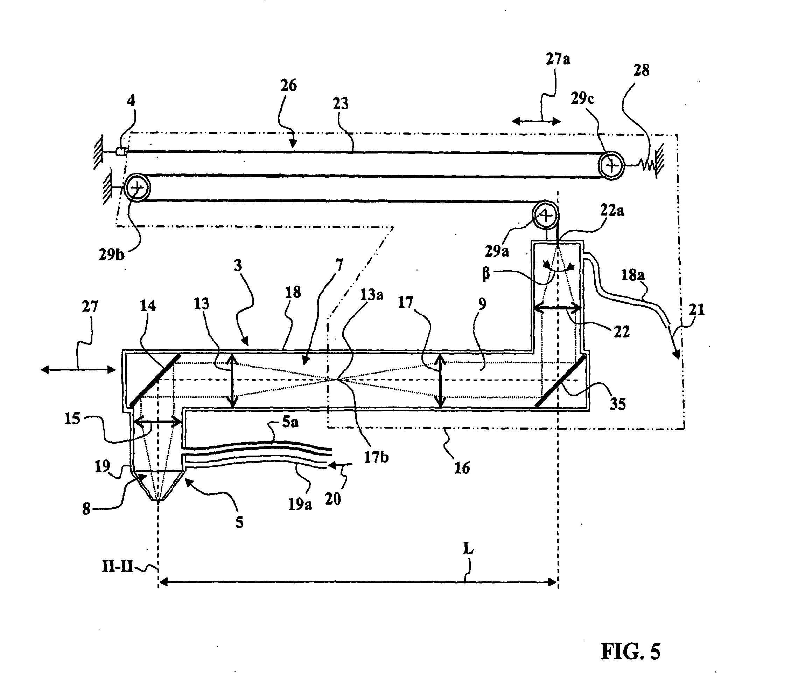

Le cinquième mode de réalisation de la figure 5 est une variante du quatrième mode de réalisation. On observe sur la figure 5 que :
- la quatrième lentille convergente 22 est sensiblement perpendiculaire à la direction de pénétration et sensiblement parallèle à la direction radiale II-II,
- la seconde lentille convergente 15 et la quatrième lentille convergente 22 sont disposées radialement de part et d'autre de la direction de pénétration,
- le dispositif optique intercalaire 16 comporte un miroir supplémentaire 35 qui reçoit le faisceau laser 9 issu de la quatrième lentille convergente 22 et qui renvoie celui-ci selon la direction de pénétration,
- la fibre optique 23 est disposée en enroulements sur un dispositif d'enroulement 26.

La totalité de la fibre optique 23 est ainsi disposée en enroulements sur un dispositif d'enroulement 26 au-dessus du dispositif de rechargement, de sorte qu'elle ne risque pas de gêner les opérations se déroulant en dessous. Ceci évite en outre le risque de détériorer la fibre optique 23 par les diverses actions des opérateurs, une fibre optique étant relativement fragile et délicate à manipuler.

Le dispositif d'enroulement 26 comporte plusieurs poulies ou cylindres 29a-29c. Le rayon des poulies ou cylindres 29a-29c est tel que la fibre optique 23 n'est pas contrainte en flexion au-delà d'une limite à partir de laquelle le faisceau laser 9 subirait des pertes dans la fibre optique 23, et au-delà de laquelle la fibre optique 23 serait détériorée.

La poulie ou cylindre 29a est solidaire du dispositif de rechargement. Le laser à diodes 4 est fixe, ainsi que la poulie ou cylindre 29b. La poulie ou cylindre 29c est rendue mobile en translation par rapport au laser à diodes 4 et à la poulie ou cylindre 29b au moyen d'un ressort 28 ou autre dispositif équivalent tel qu'un vérin ou un contrepoids.

Lors du déplacement du dispositif de rechargement selon la direction de pénétration par des mouvements illustrés par la double flèche 27, la poulie ou cylindre 29c effectuera des mouvements illustrés par la flèche 27a grâce à l'étirement ou au raccourcissement du ressort 28. La longueur de fibre optique 23 disponible varie ainsi de façon automatique afin d'accompagner les déplacements du dispositif de rechargement selon la direction de pénétration. Le ressort 28 est choisi pour exercer sur la fibre optique 23 une traction suffisamment douce pour ne pas risquer de la détériorer. Le dispositif d'enroulement 26 décrit ci-dessus doit être considéré comme un simple exemple non limitatif et pourra être adapté aux modes de réalisation des figures 6 et 7, sans pour autant sortir du cadre de la présente invention.

En alternative au dispositif d'enroulement 26 décrit ci-dessus, on peut utiliser un dispositif d'enroulement comportant un chemin de câbles en forme de gouttière comprenant une pluralité de tronçons interconnectés de façon à autoriser un mouvement relatif de rotation d'amplitude limitée entre deux tronçons successifs. La fibre optique est alors fixée au chemin de câbles et suit ses mouvements. L'amplitude du mouvement relatif de rotation entre deux tronçons successifs est telle que la fibre optique n'est pas contrainte en flexion au-delà d'une limite à partir de laquelle le faisceau laser subirait des pertes dans la fibre optique, et au-delà de laquelle la fibre optique serait détériorée.

En pratique, dans ce mode de réalisation de la figure 5, de bons résultats ont été obtenus dans le rechargement de tubes ayant un diamètre intérieur de moins de 250 mm, en utilisant les éléments suivants : des tubes de confinement 18 et 19 ayant un diamètre de 70 mm environ, le tube 18 ayant une longueur de 1 200 mm environ ; un laser à diodes de puissance de 3,5 kW ; une lentille 22 ayant une distance focale de 60 mm environ ; une lentille 17 ayant une distance focale de 300 mm environ ; une lentille 13 ayant une distance focale de 177 mm environ ; une lentille 15 ayant une distance focale de 100 mm environ, produisant dans son plan focal un spot laser de 4 à 5 mm ; une buse de projection selon le document US 5,418,350.

La présente invention n'est pas limitée aux modes de réalisation qui ont été explicitement décrits, mais elle en inclut les diverses variantes et généralisations définies dans les revendications ci-après.

## Revendications

1. Dispositif de rechargement d'une face concave (2) d'une pièce tubulaire (1) par apport de matière de rechargement et d'énergie par laser, comprenant :
- un laser à diodes (4) pour générer un faisceau laser (9),
- des moyens d'amenée de matière de rechargement (5) pour amener la matière de rechargement au voisinage d'une zone de rechargement (6) sur la face concave (2) de la pièce tubulaire (1) à recharger,
- des moyens d'amenée de faisceau laser (7) et des moyens de direction (8) pour diriger le faisceau laser (9) dans la zone de rechargement (6), les moyens d'amenée de faisceau laser (7) conduisant le faisceau laser (9) sur une longueur de pénétration (L) le long d'une direction de pénétration, puis les moyens de direction (8) déviant le faisceau laser (9) selon une direction radiale (II-II) à l'écart de la direction de pénétration, et la matière de rechargement (5) peut être base de grains de matière dure réfractaire et d'alliage métallique,
**caractérisé en ce que** :
- les moyens d'amenée de faisceau laser (7) et les moyens de direction (8) comprennent une première lentille convergente (13) dont l'axe optique est orienté selon la direction de pénétration, et qui reçoit le faisceau laser (9) provenant du laser à diodes (4),
- les moyens d'amenée de faisceau laser (7) et les moyens de direction (8) comprennent un miroir (14) qui reçoit le faisceau laser (9) issu de la première lentille convergente (13) et qui renvoie celui-ci selon la direction radiale (II-II) à l'écart de la direction de pénétration,
- les moyens d'amenée de faisceau laser (7) et les moyens de direction (8) comprennent une seconde lentille convergente (15) qui reçoit le faisceau laser (9) issu du miroir (14) et qui fait converger le faisceau laser (9) au voisinage de la zone de rechargement (6),
- un dispositif optique intercalaire (16) fait converger le faisceau laser (9) issu du laser à diodes (4) selon la direction de pénétration au voisinage du point focal objet (13a) de la première lentille convergente (13), )
- l'axe optique de la deuxième lentille convergente (15) coïncide sensiblement avec la direction radiale (II-II),
- les moyens d'amenée de matière de rechargement (5) comprennent une buse (5c) à paroi interne en forme générale de cône à pointe orientée vers la sortie et dont le sommet est percé, formant ainsi un orifice de sortie (10),
- l'orifice de sortie (10) de la buse (5c) est sensiblement coaxial à l'axe optique de la deuxième lentille convergente (15).

2. Dispositif selon la revendication 1, **caractérisé en ce que** le dispositif optique intercalaire (16) comprend une fibre optique (23) collectant le faisceau laser (9) issu du laser à diodes (4) et l'amenant jusqu'au voisinage du point focal objet (13a) de la première lentille convergente (13).

3. Dispositif selon la revendication 1, **caractérisé en ce que** le dispositif optique intercalaire (16) comprend une troisième lentille convergente (17) faisant converger le faisceau laser (9) issu du laser à diodes (4) au voisinage du point focal objet (13a) de la première lentille convergente (13).

4. Dispositif selon la revendication 3, **caractérisé en ce que** le dispositif optique intercalaire (16) comprend une fibre optique (23) collectant le faisceau laser (9) issu du laser à diodes (4) et l'amenant jusqu'au voisinage du point focal objet (17a) de la troisième lentille convergente (17).

5. Dispositif selon la revendication 3, **caractérisé en ce que** :
- le dispositif optique intercalaire (16) comprend une quatrième lentille convergente (22), recevant le faisceau laser (9) issu du laser à diodes (4),
- la troisième lentille convergente (17) reçoit le faisceau laser (9) issu de la quatrième lentille convergente (22),
- le laser à diodes (4) est placé au voisinage du point focal objet (22a) de la quatrième lentille convergente (22),
- le point focal image (17b) de la troisième lentille convergente (17) coïncide sensiblement avec le point focal objet (13a) de la première lentille convergente (13).

6. Dispositif selon la revendication 3, **caractérisé en ce que** :
- le dispositif optique intercalaire (16) comprend une quatrième lentille convergente (22), recevant le faisceau laser (9) issu du laser à diodes (4),
- la troisième lentille convergente (17) reçoit le faisceau laser (9) issu de la quatrième lentille convergente (22),
- le point focal image (17b) de la troisième lentille convergente (17) coïncide sensiblement avec le point focal objet (13a) de la première lentille convergente (13),
- une fibre optique (23) collecte le faisceau laser (9) issu du laser à diodes (4) et l'amène jusqu'au voisinage du point focal objet (22a) de la quatrième lentille convergente (22).

7. Dispositif selon la revendication 6, **caractérisé en ce que** :
- la quatrième lentille convergente (22) est sensiblement perpendiculaire à la direction de pénétration et sensiblement parallèle à la direction radiale (II-II),
- la seconde lentille convergente (15) et la quatrième lentille convergente (22) sont disposées radialement de part et d'autre de la direction de pénétration,
- le dispositif optique intercalaire (16) comporte un miroir supplémentaire (35) qui reçoit le faisceau laser (9) issu de la quatrième lentille convergente (22) et qui renvoie le faisceau laser (9) selon la direction de pénétration,
- la fibre optique (23) est disposée en enroulement sur un dispositif d'enroulement (26).

8. Dispositif selon l'une quelconque des revendications 1 à 7, **caractérisé en ce que** le dispositif optique intercalaire (16), la première lentille convergente (13) et le miroir (14) sont compris dans un tube de confinement (18) creux à double paroi dans laquelle circule un fluide de refroidissement.

9. Dispositif selon la revendication 8, **caractérisé en ce que** :
- la direction radiale (II-II) dans laquelle le miroir (14) renvoie le faisceau laser (9) issu de la première lentille convergente (13) est sensiblement perpendiculaire à la direction de pénétration.

10. Dispositif selon l'une quelconque des revendications 1 à 9, **caractérisé en ce qu'**il comporte :
- un mandrin (11) pour entraîner en rotation la pièce tubulaire (1) à recharger,
- des premiers moyens de déplacement (12) pour assurer un déplacement relatif selon la direction de pénétration entre d'une part la pièce tubulaire (1) à recharger et d'autre part le sous-ensemble (3) comprenant les moyens d'amenée de faisceau laser (7) et les moyens de direction (8), pour faire pénétrer ce sous-ensemble (3) à l'intérieur de la pièce tubulaire (1) à recharger.

11. Dispositif selon la revendication 10, **caractérisé en ce qu'**il comporte des seconds moyens de déplacement (12a) pour assurer un déplacement relatif selon une direction radiale (II-II) entre d'une part la pièce tubulaire (1) à recharger et d'autre part le sous-ensemble (3) comprenant les moyens d'amenée de faisceau laser (7) et les moyens de direction (8).

## Claims

1. Device for resurfacing a concave face (2) of a tubular part (1) by supplying resurfacing material and energy by a laser, comprising:
- a diode laser (4) for generating a laser beam (9),
- resurfacing material delivery means (5) for delivering the resurfacing material close to a resurfacing zone (6) on the concave face (2) of the tubular part (1) to be resurfaced,
- laser beam delivery means (7) and directing means (8) for directing the laser beam (9) into the resurfacing zone (6), the laser beam delivery means (7) conducting the laser beam (9) over a penetration length (L) along a penetration direction and then the directing means (8) deflecting the laser beam (9) into a radial direction (II-II) away from the penetration direction, and the resurfacing material (5) can be based on hard refractory particles and metal alloy particles, **characterised in that**:
- the laser beam delivery means (7) and the directing means (8) comprise a first convergent lens (13), the optical axis of which is oriented along the penetration direction, which lens receives the laser beam (9) coming from the diode laser (4),
- the laser beam delivery means (7) and the directing means (8) comprise a mirror (14) which receives the laser beam (9) coming from the first convergent lens (13) and sends said beam along the radial direction (II-II) away from the penetration direction,
- the laser beam delivery means (7) and the directing means (8) comprise a second convergent lens (15) which receives the laser beam (9) coming from the mirror (14) and makes the laser beam (9) converge close to the resurfacing zone (6),
- an optical insert (16) makes the laser beam (9) coming from the diode laser (4) along the penetration direction converge near the object focal point (13a) of the first convergent lens (13),
- the optical axis of the second convergent lens (15) substantially coincides with the radial direction (II-II),
- the resurfacing material delivery means (5) comprise a nozzle (5c) with a generally conical internal wall with its point oriented towards the outlet and the apex of which is pierced, thus forming an outlet orifice (10),
- the outlet orifice (10) of the nozzle (5c) is substantially coaxial with the optical axis of the second convergent lens (15).

2. Device according to claim 1, **characterised in that** the optical insert (16) includes an optical fibre (23) that collects the laser beam (9) coming from the diode laser (4) and delivers it close to the object focal point (13a) of the first convergent lens (13).

3. Device according to claim 1, **characterised in that** the optical insert (16) comprises a third convergent lens (17) masking the laser beam (9) coming from the diode laser (4) converge near the object focal point (13a) of the first convergent lens (13).

4. Device according to claim 3, **characterised in that** the optical insert (16) includes an optical fibre (23) that collects the laser beam (9) coming from the diode laser (4) and delivers it close to the object focal point (17a) of the third convergent lens (17).

5. Device according to claim 3, **characterised in that**:
- the optical insert (16) comprises a fourth convergent lens (22), which receives the laser beam (9) coming from the diode laser (4),
- the third convergent lens (17) receives the laser beam (9) coming from the fourth convergent lens (22),
- the diode laser (4) is placed close to the object focal point (22a) of the fourth convergent lens (22),
- the image focal point (17b) of the third convergent lens (17) coincides substantially with the object focal point (13a) of the first convergent lens (13).

6. Device according to claim 3, **characterised in that**:
- the optical insert (16) comprises a fourth convergent lens (22), which receives the laser beam (9) coming from the diode laser (4),
- the third convergent lens (17) receives the laser beam (9) coming from the fourth convergent lens (22),
- the image focal point (17b) of the third convergent lens (17) coincides substantially with the object focal point (13a) of the first convergent lens (13),
- an optical fibre (23) collects the laser beam (9) coming from the diode laser (4) and delivers it close to the object focal point (22a) of the fourth convergent lens (22).

7. Device according to claim 6, **characterised in that**:
- the fourth convergent lens (22) is substantially perpendicular to the penetration direction and substantially parallel to the radial direction (II-II),
- the second convergent lens (15) and the fourth convergent lens (22) are placed radially on either side of the penetration direction,
- the optical insert (16) includes an additional mirror (35) which receives the laser beam (9) coming from the fourth convergent lens (22) and sends the laser beam (9) back along the penetration direction,
- the optical fibre (23) is placed as a winding on a winding device (26).

8. Device according to any one of claims 1 to 7, **characterised in that** the optical insert (16), the first convergent lens (13) and the mirror (14) are contained within a double-walled hollow confinement tube (18), a coolant circulating between the walls.

9. Device according to claim 8, **characterised in that**:
- the radial direction (II-II) along which the mirror (14) sends back the laser beam (9) coming from the first convergent lens (13) is substantially perpendicular to the penetration direction.

10. Device according to any one of claims 1 to 9, **characterised in that** it comprises:
- a mandrel (11) for rotating the tubular part (1) to be resurfaced,
- first displacement means (12) for providing a relative displacement along the penetration direction between, on the one hand, the tubular part (1) to be resurfaced and, on the other hand, the subassembly (3) comprising the laser beam delivery means (7) and the directing means (8), in order to make this subassembly (3) penetrate into the tubular part (1) to be resurfaced.

11. Device according to claim 10, **characterised in that** it includes second displacement means (12a) for providing a relative displacement along a radial direction (II-II) between, on the one hand, the tubular part (1) to be resurfaced and, on the other hand, the subassembly (3) comprising the laser beam delivery means (7) and the directing means (8).

## Patentansprüche

1. Vorrichtung zum Beschichten einer konkaven Fläche (2) eines rohrförmigen Werkstücks (1) durch Aufbringen von Beschichtungsmaterial und von Laserenergie, mit:
- einem Diodenlaser (4) zum Erzeugen eines Laserstrahls (9),
- Aufbringungsmitteln (5) für Beschichtungsmaterial zum Aufbringen von Beschichtungsmaterial in der Nähe einer Beschichtungszone (6) auf der konkaven Fläche (2) des zu beschichtenden rohrförmigen Werkstücks (1),
- Mitteln (7) zum Aufbringen des Laserstrahls und Richtungsmitteln (8) zum Leiten des Laserstrahls (9) in die Beschichtungszone (6), wobei die Mittel (7) zum Aufbringen des Laserstrahls den Laserstrahl (9) auf einer Eindringlänge (L) längs einer Eindringrichtung leiten, dann die Richtungsmittel (8) den Laserstrahl (9) in einer radialen Richtung (II-II) abseits von der Eindringrichtung ablenken,
und das Beschichtungsmaterial (5) auf Basis von Körnern aus hartem feuerfestem Material und einer metallischen Legierung sein kann,
**dadurch gekennzeichnet, daß**:
- die Mittel (7) zum Aufbringen des Laserstrahls und die Richtungsmittel (8) eine erste Sammellinse (13) aufweisen, deren optische Achse längs der Eindringrichtung ausgerichtet ist und die den Laserstrahl (9), der von dem Diodenlaser (4) stammt, empfängt,
- die Mittel (7) zum Aufbringen des Laserstrahls und die Richtungsmittel (8) einen Spiegel (14) aufweisen, der den Laserstrahl (9) empfängt, der von der ersten Sammellinse (13) stammt und der diesen in der radialen Richtung (II-II) versetzt zur Eindringrichtung weiterleitet,
- die Mittel (7) zum Aufbringen des Laserstrahls und die Dichtungsmittel (8) eine zweite Sammellinse (15) enthalten, die den von dem Spiegel (14) stammenden Laserstrahl (9) empfängt und die den Laserstrahl (9) in der Nähe der Beschichtungszone (6) konvergiert,
- eine optische Zwischeneinrichtung (16), die den von dem Diodenlaser (4) stammenden Laserstrahl (9) in einer Eindringrichtung in der Nähe des Brennpunktes (13a) der ersten Sammellinse (13) konvergieren läßt,
- die optische Achse der zweiten Sammellinse (15) im wesentlichen mit der radialen Richtung (II-II) übereinstimmt,
- die Aufbringungsmittel (5) für Beschichtungsmaterial eine Düse (5c) mit einer Innenwand in genereller Form eines Konus enthält, dessen Spitze in Richtung zum Ausgang weist und dessen Scheitelpunkt durchbohrt ist, um so eine Austrittsöffnung (10) zu bilden,
- die Austrittsöffnung (10) der Düse (5c) im wesentlichen koaxial zur optischen Achse der zweiten Sammellinse (15) ist.

2. Vorrichtung nach Anspruch 1, **dadurch gekennzeichnet, daß** die optische Zwischeneinrichtung (16) einen Lichtwellenleiter (23) enthält, der den von dem Diodenlaser (4) stammenden Laserstrahl (9) bündelt und ihn bis in die Nähe des Brennpunktes (13a) der ersten Sammellinse (13) leitet.

3. Vorrichtung nach Anspruch 1, **dadurch gekennzeichnet, daß** die optische Zwischeneinrichtung (16) eine dritte Sammellinse (17) aufweist, die den von dem Diodenlaser (4) stammenden Laserstrahl (9) in der Nähe des Brennpunktes (13a) der ersten Sammellinse (13) konvergieren läßt.

4. Vorrichtung nach Anspruch 3, **dadurch gekennzeichnet, daß** die optische Zwischeneinrichtung (16) einen Lichtwellenleiter (23) aufweist, der den von dem Diodenlaser (4) stammenden Laserstrahl (9) sammelt und ihn bis in die Nähe des Brennpunktes (17a) der dritten Sammellinse (17) leitet.

5. Vorrichtung nach Anspruch 3, **dadurch gekennzeichnet, daß**:
- die optische Zwischeneinrichtung (16) eine vierte Sammellinse (22) aufweist, die den von dem Diodenlaser (4) stammenden Laserstrahl (9) empfängt,
- die dritte Sammellinse (17) den von der vierten Sammellinse (22) stammenden Laserstrahl (9) empfängt,
- der Diodenlaser (4) in der Nähe des Brennpunktes (22a) der vierten Sammellinse (22) angeordnet ist,
- der Bildpunkt (17b) der dritten Sammellinse (17) im wesentlichen mit dem Brennpunkt (13a) der ersten Sammellinse (13) übereinstimmt.

6. Vorrichtung nach Anspruch 3, **dadurch gekennzeichnet, daß**:
- die optische Zwischeneinrichtung (16) eine vierte Sammellinse (22) aufweist, die den von dem Diodenlaser (4) stammenden Laserstrahl (9) empfängt,
- die dritte Sammellinse (17) den von der vierten Sammellinse (22) stammenden Laserstrahl (9) empfängt,
- der Bildpunkt (17b) der dritten Sammellinse (17) im wesentlichen mit dem Brennpunkt (13a) der ersten Sammellinse (13) übereinstimmt,
- ein Lichtwellenleiter (23) den von dem Diodenlaser (4) stammenden Laserstrahl (9) bündelt und ihn bis in die Nähe des Brennpunktes (22a) der vierten Sammellinse (22) leitet.

7. Vorrichtung nach Anspruch 6, **dadurch gekennzeichnet, daß**:
- die vierte Sammellinse (22) im wesentlichen senkrecht zur Eindringrichtung und im wesentlichen parallel zur radialen Richtung (II-II) steht,
- die zweite Sammellinse (15) und die vierte Sammellinse (22) radial gegeneinander in der Eindringrichtung versetzt sind,
- die optische Zwischeneinrichtung (16) einen zusätzlichen Spiegel (35) aufweist, der den von der vierten Sammellinse (22) stammenden Laserstrahl (9) empfängt und der den Laserstrahl (9) längs der Eindringrichtung weiterleitet,
- der Lichtwellenleiter (23) in Aufwicklung auf einer Aufwicklungsvorrichtung (26) angeordnet ist.

8. Vorrichtung nach irgendeinem der Ansprüche 1 bis 7, **dadurch gekennzeichnet, daß** die optische Zwischeneinrichtung (16), die erste Sammellinse (13) und der Spiegel (14) in einem hohlen doppelwandigen Begrenzungsrohr (18) untergebracht sind, in dem eine Kühlflüssigkeit zirkuliert.

9. Vorrichtung nach Anspruch 8, **dadurch gekennzeichnet, daß**:
- die radiale Richtung (II-II), in welcher der Spiegel (14) den von der ersten Sammellinse (13) stammenden Laserstrahl (9) zurückstrahlt, im wesentlichen senkrecht zur Eindringrichtung steht.

10. Vorrichtung nach irgendeinem der Ansprüche 1 bis 9, **dadurch gekennzeichnet, daß** sie enthält:
- eine Drehspindel (11) zum Drehantreiben des zu beschichtenden rohrförmigen Werkstücks (1),
- erste Verschiebungsmittel (12) zum Gewährleisten einer Relativverschiebung zwischen einerseits dem zu beschichtenden rohrförmigen Werkstück (1) und andererseits einer Untergruppe (3), die die Mittel (7) zum Aufbringen des Laserstrahls und die Richtungsmittel (8) enthält, um diese Untergruppe (3) in das Innere des zu beschichtenden rohrförmigen Werkstückes (1) eindringen zu lassen.

11. Vorrichtung nach Anspruch 10, **dadurch gekennzeichnet, daß** sie zweite Verschiebungsmittel (12a) enthält, um eine Relativverschiebung in radialer Richtung (II-II) zwischen einerseits dem zu beschichtenden rohrförmigen Werkstück (1) und andererseits der Untergruppe (3) sicherzustellen, die die Mittel (7) zum Aufbringen des Laserstrahls und die Richtungsmittel (8) enthält.
